# EUROPEAN PATENT SPECIFICATION

(11) **EP 1 748 888 B1**
(45) Date of publication and mention of the grant of the patent: **04.08.2010**
(21) Application number: 04735086.3
(22) Date of filing: 27.05.2004
(51) Int. Cl.: B32B 27/00, B32B 27/32

(54) **BI-LAYERED CONTAINER FOR HAZARDOUS SUBSTANCES AND PROCESS FOR PRODUCING THE SAME**
ZWEILAGIGER BEHÄLTER FÜR GEFAHRSTOFFE UND HERSTELLUNGSVERFAHREN DAFÜR
RECIPIENT A DOUBLE COUCHE POUR DES MATIERES DANGEREUSES, ET PROCEDE DE FABRICATION

(43) Date of publication of application: 07.02.2007
(73) Proprietor: PACHMAS METAL PLASTIC & FIBRE INDUSTRIES, 38980 Ein Hahoresh (IL)
(72) Inventor: GUTWILLIG, Boaz, 38980 Ein Hahoresh (IL)
(74) Representative: Elend, Almut Susanne
(86) International application number: PCT/IL2004/000452
(87) International publication number: WO 2005/115748

(56) References cited:
- GB-A- 2 380 448
- US-A- 4 647 509
- US-A- 4 923 750

## Description

### Field of the Invention

The present invention relates to the field of containers. More particularly, the invention relates to a co-extruded bi-layered container for hazardous substances.

### Background of the Invention

Many prior art containers for hazardous substances, such as chemical products for use in agriculture, are formed by multi-layer co-extrusion blow molding. Each layer provides a different characteristic to the formed laminate.

In addition to having low permeability, high impact resistance, high stress crack resistance, and being chemically resistant to the hazardous substances to prevent damage to the surroundings, such containers are also preferably of low weight, high mechanical strength so that they will be commercially attractive, particularly to those working in agricultural applications.

Containers for hazardous substances are subjected to the following tests, according to the UN Recommendation for the Transport of Dangerous Goods:
- Drop test, at -18°C and at a height corresponding to the specific weight of the material being tested and the class of the material;
- Leak proofness test, at 20 kPa above atmospheric pressure;
- Internal pressure test, at 150 kPa above atmospheric pressure for 30 minutes; and
- Stacking compression test, to demonstrate its dimensional stability and stress crack behavior, at a stacking height of 3 m which includes the height of the test sample and at a temperature of 40°C, for a duration of 28 days.

The inner layer, i.e. the barrier layer, needs to be essentially impermeable to the hazardous substance, particularly if it is a liquid or a gel. The barrier layer is generally made from polyamide, with a minimum thickness of 30 microns, to ensure that the container remains structurally strong and chemically stable.

The outer layer provides mechanical strength and stress crack resistance, to protect the contents of the container against mechanical shocks. Typically, the outer layer is made from high molecular weight HD-PE.

The outer layer and inner layer are usually chemically incompatible, resulting in delamination, or separation, when co-extruded to adjacent layers. Consequently, an adhesive layer, such as modified polyolefin, is interposed between the outer and inner layers, to provide optimal bonding therebetween.

Many containers also employ a regrind layer made of melted scrap material, such as that which was removed during the pinching-off process during formation of the selected configuration of the container, so that the end product may be more cost effective. A typical four-layer agrochemical container may comprise, by percentage of volume, an inner layer of 8%, an adhesive layer of 5%, a mixture of HDPE and regrind material layer of 72% and an outer layer of 15%. When a regrind layer is not employed, the outer layer would have to comprise 87% by volume of the container, and therefore usage of a regrind layer significantly lowers manufacturing costs.

However, each of the three or four layers is produced by means of a separate extruder, with the extruded material being combined in a co-extrusion die to form a multi-layer parison, or tube-shaped mass of molten plastic material. The parison is then blow molded, whereby compressed gas, such as air, is injected into the interior of the parison, causing the latter to expand and to assume the contour of a closed mold, which is positioned to envelop the parison. The container is then demolded and deburred. As the number of container layers increase, the manufacturing process becomes correspondingly more complex and expensive.

It is an object of the present invention to provide a bi-layered container for hazardous substances.

It is an additional object of the present invention to provide a container which is made from material that is chemically resistant to the hazardous substances and that has a high impact resistance.

It is an additional object of the present invention to provide a bi-layered container that can be economically produced.

Other objects and advantages of the invention will become apparent as the description proceeds.

### Summary of the Invention

The present invention provides a bi-layered container for substances in liquid or gel form, particularly aromatic solvents, aliphatic solvents, ketones, kerosenes, alcohols and pestisides and herbisides that are dissolved in such solvents (also call Agro-chemicals) may also be filled into the bi-layered containers, all are injurious to humans or to animals when brought in contact with the skin, when swallowed, or when introduced to soil, sand and the like- hereinafter referred to as. "hazardous substances."

Said bi-layered container comprises co-extruded outer and inner layers, said outer layer comprising regrind material from said outer and inner layers.

The outer layer is produced from a mixture of high-density polyethylene, such as virgin high-density polyethylene, MAgPE (Maleic Anhydride Grafted Polyethylene C0-Polymer) preferably ranging from 3-4%, and regrind material from both the inner and outer layers, said regrind material preferably ranging from 15-40%, and more preferably 30%, of the outer layer. The outer layer preferably has a thickness ranging from 90%-98% of the overall wall thickness of the container.

Suitable high-density polyethylene for providing mechanical strength and stress crack resistance has a melt flow index of 4.5-10.0 g/10 min (at 190°C/21.6 kg), a density of approximately 0.952 g/cm³, a yield strength of approximately 28 MPa when stretched at 50 mm/min, an elongation of greater than 700% at break, a flexural modulus of approximately 1200 MPa, a hardness of approximately 66 Shore D, a notched impact strength of approximately 100 KJ/m², and an environmental stress cracking resistance of greater than 400 hours.

In one preferred embodiment of the invention, the outer layer further comprises an MAgPE coupling agent having a density ranging between 0.956-0.960 g/cm³, a mass flow rate ranging between 2-3 g/10 min (at 190°C/2.16 kg), a melting point ranging between 133-136°C, a moisture content of less than 0.1%, and a Maleic Anhydride graft level of approximately 1.0% per weight. The coupling agent is mixed with the HD_PE and the regrind material in the outer layer at a concentration ranging between 3-4% of the MAgPE, to bond the inner and outer layers without need of a separate adhesive layer.

In one aspect, the outer layer further comprises up to 2% of color concentrating Master Batch (MB).

The inner layer is made from polyamide homopolymer, such as nylon, preferably having a density of approximately 1.06 g/cm³, a notched impact strength of approximately 65 Charpy at 23°C when dry and approximately 15 Charpy at -30°C when dry, a permeability, when measured on 1-mm sheets, of approximately 0.42 g/m²-day for dioxane, 0.038 g/m²-day for N-Hexan, 0.13 g/m²-day for toluene, 0.41 g/m²-day for carbon disulphide, 2.8 g/m²-day for chloroform, and0.03 g/m²-day for ethylether, a mass volume flow rate of approximately 35 ml/10 min at 275°C/5 kg, a melting point of approximately 222°C, and a moisture content of less than 0.3%. The thickness of the inner layer preferably ranges from 30 to 100 microns.

The inner layer further comprises a maleic anhydride grafted polyethylene coupling agent, in one preferred embodiment of the invention having a density ranging between 0.956-0.960 g/cm³, a mass flow rate ranging between 2-3 g/10 min (at 190°C/21.6 kg), a melting point ranging between 133-136°C, a moisture content of less than 0.1%, and a maleic anhydride graft level of approximately 1.0% per weight. The coupling agent is preferably mixed with the polyamide homopolymer in the inner layer at a concentration ranging up to 4% of the MAgPE, to bond the inner and outer layers without need of a separate adhesive layer.

The present invention also provides a process for producing a bi-layered container for hazardous substances, comprising producing outer layer material and inner layer material; regrinding scrap outer and inner layer material; mixing said reground scrap outer and inner layer material with said outer layer material; co-extruding outer and inner layers to form a bi-layered parison; blow molding said parison; and demolding and deburring said blow molded parison whereby to produce a marketable container.

Preferably, the reground scrap is fed into a mixer at a predetermined weight ratio of 15-40% by weight of the outer layer material.

In one aspect, the outer layer material is extruded at a temperature of 220°C to 230°C and the inner layer material is extruded at a temperature of 230°C to 240°C.

In one aspect, the parison is pre-blown by inert gas, such as nitrogen. The inert gas is injected into the interior of the parison at approximately room temperature and at a pressure of less than 100 kPa.

### Brief Description of the Drawings

In the drawings:
- Fig. 1 is a schematic drawing showing a laminate which is formed in accordance with the present invention;
- Fig. 2 is a cross-sectional view of a co-extrusion device suitable for producing bi-layered containers;
- Fig. 3A comparatively illustrates the weight loss rate of Xylene at 52 °C with 95% filling volume for the three types of tested containers as a function of time.
- Fig.. 3B comparatively illustrates the weight loss rate of Xylene at 52°C with 95% filling volume for the three types of tested containers as a function of time, using more sensitive vertical scale.

### Detailed Description of Preferred Embodiments

The present invention is a co-extruded bi-layered container for hazardous substances, wherein the outer layer is produced from regrind of both the outer and inner layers the, HDPE, the MAgPE and in some cases, MB color concentrate, so that the outer and inner layers are rendered chemically compatible, and therefore an adhesive layer is unnecessary.

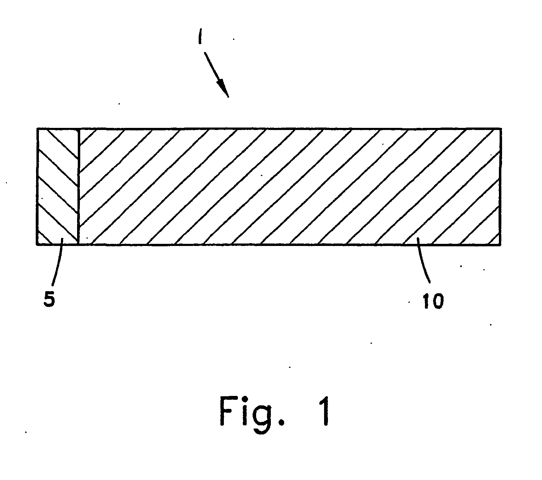

The Applicant has surprisingly discovered that a two-layered laminate is sufficient to prevent the outward diffusion of hazardous substances from a container produced from said laminate. As shown in Fig. 1, laminate 1 comprises inner layer 5 and outer layer 10. The thickness of the inner layer ranges from 30 to 100 microns, such that the outer layer has a thickness ranging from 90%-98% of the overall wall thickness of the container.

Inner layer 5 is made from an easily processable PA-6 grade polyamide homopolymer; e.g. Grilon BFZ 3 produced by EMS-Chemie AG, Switzerland (hereinafter referred to as PA), having a density of approximately 1.06 g/cm³, high impact strength such that its notched impact strength is approximately 65 Charpy at 23°C when dry and is approximately 15 Charpy at -30°C when dry, and a low permeability, when measured on 1-mm sheets, of approximately 0.42 g/m²-day for dioxane, 0.038 g/m²-day for N-Hexan, 0.13 g/m²-day for toluene, 0.41 g/m²-day for carbon disulphide, 2.8 g/m²-day for chloroform, and0.03 g/m²-day for ethylether. PA has a mass volume flow rate (MVR) of approximately 35 ml/10 min at 275°C/5 kg, a melting point of approximately 222°C and a moisture content of less than 0.3%.

The inner layer also comprises a maleic anhydride grafted polyethylene coupling agent, e.g. Fusabond E MB-100D manufactured by Dupont (hereinafter referred to as MAgPE) having a density ranging between 0.956-0.960 g/cm³, a mass flow rate (MFR) ranging between 2-3 g/10 min (at 190°C/2.16 kg), a melting point ranging between 133-136°C, a moisture content of less than 0.1%, and a maleic anhydride graft level of approximately 1.0% per weight. MAgPE is mixed with PA in the inner layer at a concentration ranging between 96-100% of PA.

Outer layer 10 is made from a mixture of virgin high density polyethylene (HDPE) and regrind from both the inner and outer layers, and the MAgPE with concentration of 3-4% of the outer layer, with the regrind material ranging from 15-40%, and preferably 30%, of the outer layer. MB color concentrate may be optionally added, as well.

Suitable HDPE for providing mechanical strength and stress crack resistance, e.g. Marlex 50100 manufactured by Chevron Phillips Chemical Company LP, Houston, Texas, USA and Hostalen GM 82.55 manufactured by Basell, Germany, has a melt flow index (MFI) 4.5-10.0 g/10 min (at 190° C/21.6kg) , a density of approximately 0.952 g/cm3; a yield strength of approximately 28 MPa when stretched at 50 mm/min, an elongation of greater than 700% at break, a flexural modulus of approximately 1200 MPa, a hardness of approximately 66 Shore D a notched impact strength of approximately 100 KJ/m², and an environmental stress crackling resistance (ESCR) of greater than 400 hours.

The outer layer may also comprise up to 2% MB, e.g. standard MB L 1125 white MB produced by Kafrit Industries Ltd., Kibbutz Kfar-Aza, Israel.

The scrap material which remains after the production of a plurality of containers is reground into grains of approximately 8 mm diameter, depending on the grinder net size. A feeding device, e.g. CD 400 manufactured by Sysmetric Ltd., Afula, Israel, sorts the grains into groups corresponding to each constituent material of a container. Each group of grains is fed to a mixer at a predetermined weight ratio corresponding to the exact weight ratio of each constituent material in the container, including the regrind material. "Regrind," is defined herein as that mixed reground material. The mixed grains are introduced to the extruder, e.g. via a hopper at an inlet to the extruder.

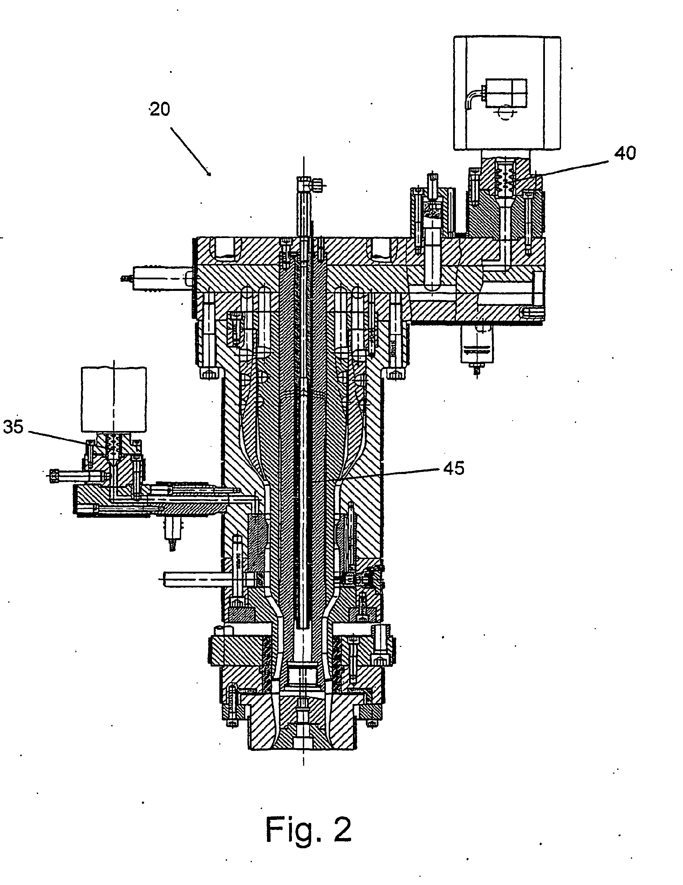

Fig. 2 illustrates an exemplary co-extrusion device, which is generally designated by numeral 20, suitable for the present invention. As seen, co-extrusion device 20 comprises main extruder (not shown) by which the outer layer is produced and satellite extruder 40 by which the inner layer is produced, as well as supplementary extruder 35 for producing transparent stripes. The inner and outer layers are co-extruded simultaneously.

Annular heating element 45 is mounted in the area subjacent to the inner surface of the conduit through which extruded material flows. Heating element 45, which is regulated by a controller (not shown), maintains the material forming the inner layer at a temperature of 230-240°C. This temperature range is suitable for the extrusion of PA. Since PA also is found in the outer layer as regrind, the outer layer needs to be heated to such a high temperature. Although this temperature is normally too high for the production of HD_PE and is liable to impair the bonding characteristics thereof, the Applicant has surprisingly determined that containers produced according to the process of the present invention conform to the requirements of Israeli Standard No. 2302, IMDG Code, ADR-RID and ICAO-TI, as tested by The Standards Institute of Israel with respect to a drop test, leak proofness test, internal pressure test, and stacking compression test.

Following formation of a bi-layer parison is pre-blown, whereby compressed inert gas, such as Nitrogen, e.g. of room temperature and of a pressure less than 100 kPa, so as to increase the strength of the weld lines. Then the latter is blow molded by compressed air having a pressure of 10 bars. As a result, the parison expands and assumes the contour of a closed container mold, which is positioned to envelop the parison. The container is then demolded and deburred.

### Example 1 (non-inventive)

### Diffusion Tests of Organic Solvent in 10-liter containers

10-liter containers were filled with Xylene, an organic solvent having a purity degree of 99.9%. Diffusion tests were conducted at the Israel Plastics and Rubber Center (IPRC) from July 7, 2003 to August 4, 2003, in order to determine the resistance of the containers to Xylene permability.

Containers produced in accordance with the present invention were made with an inner layer of 100% PA (Grilon BFZ 3) and an outer layer comprised of a mixture of 70% HDPE (Hostalen GM 8255), 4% MAgPE (Fusabond E MB100D) and 1% white MB (L 1125). The outer layer also comprised regrind from the inner and outer layers, with a mixture of 25% regrind material.

The following four types of containers were employed:
T50- bi-layered container having a 50-micron inner layer
T100- bi-layered container having a 100-micron inner layer
HDPE- mono-layered container made of pure HDPE having a minimum wall thickness of 1.2 mm and an average thickness of 1.4 mm.
Ref- four-layered commercially available container produced by Aico Salconplast s.p.a, Italy having layers of PE/reg/tie/PA, with a 60-micron thick layer of PA.

Three repetitions of each container type were used, and each container was accordingly referred to with a suffix representing the repetition number. For example, T50-1 was the first repetition of container type T50.

The containers were placed in a temperature-controlled evaporation room for a duration of 28 days. The room temperature was stabilized at a temperature of 52-53°C during the test period. Each container, including the cork and sealing film, was weighed before being filled with Xylene, at a filling volume of either 95% or 20%. After being filled, each container was sealed by a cork and a soldered aluminum film between the cork and container spout. The containers were weighed every four days with an accuracy of 0.01 g.

The test results were tabulated in Table 1. Each column indicates the percentage of the filling volume and the units of the tabulated value.

**Table I**

| Container Type | Weight Loss 95% [g] | Weight Difference 95% [%] | Weight Loss 20% [g] | Weight Difference 20% [%] |
|---|---|---|---|---|
| T50-1 | 3 | -0.035 | 1.95 | -0.101 |
| T50-2 | 4 | -0.045 | 2.10 | -0.108 |
| T50-3 | 2 | -0.024 | 2.30 | -0.119 |
| T100-1 | 2 | -0.023 | 3.50 | -0.185 |
| T100-2 | 2 | -0.023 | 2.20 | -0.146 |
| T100-3 | 2 | -0.024 | - | - |
| HDPE-1 | 719 | -8.224 | 414.90 | -21.12 |
| HDPE-2 | 723 | -8.218 | 417.05 | -21.08 |
| HDPE-3 | 719 | -7.905 | 412.95 | -21.22 |
| Ref-1 | 7 | -0.080 | 5.05 | -0.267 |
| Ref-2 | 8 | -0.090 | 4.70 | -0.251 |
| Ref-3 | 8 | -0.091 | 4.30 | -0.230 |

As can be clearly seen from Table 1, bi-layered T50 containers lost 0.035% of the filling weight at 95% volume filling and 0.109% at 20% volume filling. Bi-layered T100 containers lost 0.023% of the filling weight at 95% volume filling and 0.166% at 20% volume filling. In contrast, mono-layered HDPE containers lost 8.12% of the filling weight at 95% volume filling and 21.14% at 20% volume filling. Four-layered Reference containers lost 0.087% of the filling weight at 95% volume filling and 0.249% at 20% volume filling.

Therefore the bi-layered containers demonstrated better performance in terms of blockade diffusion of aggressive organic solvents such as Xylene than four-layered Reference containers, by a factor on the order of 2.5, and better performance than pure HDPE containers, by a factor on the order of 235.

### Example 2 (inventive)

### Diffusion Tests of Organic Solvent in 22-liter containers

22-liter containers were filled with an organic solvent of a Xylene kind, having a purity degree of 99.9%. These containers were made with an inner layer of 96% PA (Grilon BFZ 3) and 4% MAgPE (Fusabond EMB 100D). The outer layer consists of a mixture of 65% HDPE (Hostalen GM 8255), 4% MAgPE (Fusabond EMB 100D), 1% white MB (L-1433) and 25% of regrind material from the inner and outer layers. Each container weight was 1.25 Kg. The inner layer's wall has a minimal thickness of 35 microns (50 microns average). The outer layer's wall has a minimal thickness of 1.5 mm (2 mm average).

The containers were placed in a temperature controlled evaporation room for 28 days. The room temperature was stabilized at 52-53°C during the test period. All three types of containers that were tested (with four repetitions of each type) were filled up to 95% of their volume. Each empty container (including the cork and sealing film) was weighed prior to filling, and then was filled with each volume of the filling liquid. After filling, each container was sealed with a soldered aluminum film on its opening edge with the closing cork on top. The containers were weighed every four days (using a 1/100 g precision weight). During the test, the results were concentrated in Table I (for data analysis and control purposes after completing the test period). The test period was full 28 days.

The following types of containers were tested:
- B20- 22 Liters PE/PA bi-layered agro container with 50 microns barrier layer thickness, manufactured by the Applicant
- BOXMORE - 22 Liters agro container, with fluorinated HDPE inner face, manufactured by Boxmore International P.L.C. ,Newtownabbey, UK
- HDPE ref.- 22 Liters mono-layered pure HDPE agro container, manufactured by the Applicant

The test results are tabulated in Table II.

**Table II**

| **Container type** | **Xylene weight-loss factor after 28 days at 52°C with 95% filling volume [grams]** | **Net relative weight difference after 28 days at 52 °C with 95% filling volume [%]** |
|---|---|---|
| B-20-1 | 1.1 | -0.03 |
| B-20-2 | 0.4 | -0.01 |
| B-20-3 | 1.4 | -0.03 |
| B-20-4 | 1.1 | -0.03 |
| BOXMOR-1 | 65.2 | -1.57 |
| BOXMOR-2 | 5.9 | -0.15 |
| BOXMOR-3 | 4.6 | -0.12 |
| BOXMOR-4 | 6.0 | -0.15 |
| HDPE Ref. -1 | 396.8 | -9.888 |
| HDPE Ref. -2 | 370.6 | -9.37 |
| HDPE Ref. -3 | 370.0 | -9.26 |
| HDPE Ref. -4 | 393.6 | -9.84 |

The above results show the following:
- after. 28 days at 52 °C with 95% filling volume bi-layered B-20 containers lost less than an average value of 0.03% of their filling weight;
- after 28 days at 52 °C with 95% filling volume mono-layered HDPE Ref. containers lost less than an average value of 9.6% of their filling weight during accelerated evaporation test;
- after 28 days at 52 °C with 95% filling volume fluorinated HDPE containers lost an average value of 0.5 % of their filling weight during accelerated evaporation test.

Therefore, containers manufactured according to the process proposed by the present invention show significant advantage regarding blocking diffusion of aggressive organic solvents, such as Xylene.

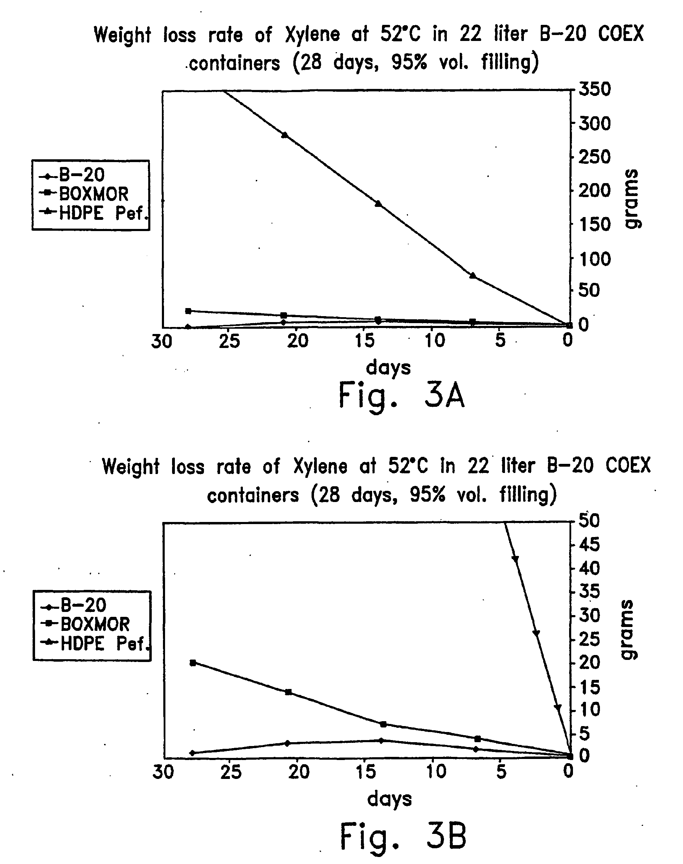

Experimental results of weight loss rate of Xylene at 52 °C with 95% filling volume are comparatively illustrated for the three types of tested containers as a function of time in Figs. 3A and 3B (using 7 times more sensitive vertical scale).

## Claims

1. A bi-layeted container for hazardous substances, comprising co-extruded outer and inner layers, said inner layer comprising a polyamide homopolymer and a maleic anhydride grafted polyethylene coupling agent (MAgPE), and said outer layer comprising high-density polyethylene (HDPE), a maleic anhydride grafted polyethylene coupling agent (MAgPE) and regrind material from said outer and inner layers.

2. The bi-layeted container according to claim 1, wherein
(a) the outer layer has a thickness ranging from 90%-98% of the overall wall thickness of the container;
(b) the thickness of the inner layer ranges from 30 to 100 microns; and/or
(c) the co-extruded inner and outer layers are blow molded to the shape of said container.

3. The bi-layeted container according to claim 1 or claim 2, wherein the regrind material ranges from 15 to 40% by weight of the outer layer.

4. The bi-layeted container according to claim 3, wherein
(a) the regrind material comprises approximately 30% by weight of the outer layer;
(b) the high-density polyethylene has a melt flow index of 4.5-10.0 g/10 min (190°C/21.6kg), a density of approximately 0.952 g/cm³, a yield strength of approximately 28 MPa when stretched at 50 mm/min, an elongation of greater than 700% at break, a flexural modulus of approximately 1200 MPa, a hardness or approximately 66 Shore D, a notched impact strength of approximately 100 kJ/m², and an environmental stress cracking resistance of greater than 400 hours;
(c) the MAgPE of the outer layer has a density ranging between 0.956-0.960 g/cm³, a mass flow rate ranging between 2-3 g/10 min at 190°C/2.16 kg, a melting point ranging between 133-13°C, a moisture content of less than 0.1% by weight, and a maleic anhydride graft level of approximately 1.0% per weight; and/or
(d) the outer layer further comprises up to 2% by weight of color concentrating Master Batch (MB).

5. The bi-layeted container according to claim 4(c), wherein the MAgPE is mixed with the HDPE and the regrind material in the outer layer at a MAgPE concentration ranging between 3 and 4% by weight.

6. The bi-layered container according to any of claims 1 to 5, wherein
(a) the polyamide homopolymer is nylon; and/or
(b) the polyamide homopolymer has a density of approximately 1.06 g/cm³, a notched impact strength of approximately 65 Charpy at 23°C when dry and approximately 15 Charpy at -30°C when dry, a permeability, when measured on 1 mm sheets, of approximately 0.42 g/m²-day for dioxane, 0.038 g/m²-day for n-hexane, 0.13 g/m²-day for toluene, 0.41 g/m²-day for carbon disulphide, 2.8 g/m²-day for chloroform, and 0.03 g/m²-day for ethylether, a mass volume flow rate of approximately 35 ml/10 min at 275°C/5 kg, a melting point of approximately 222°C, and a moisture content of less than 0.3% by weight.

7. The bi-layered container according to any of claims 1 to 6, wherein the MAgPE of the inner layer has a density ranging between 0.956-0.960 g/cm a mass flow rate ranging between 2-3 g/10 min at 190°C2.16 kg, a melting point ranging between 133-13°C, a moisture content of less than 0.1% by weight, and a maleic anhydride graft level of approximately 1.0% per weight.

8. The bi-layered container according to claim 7, wherein the coupling agent is mixed with the polyamide homopolymer in the inner layer at a MAgPE concentration ranging up to 4% by weight.

9. A process for producing a bi-layeted container for hazardous substances, which container comprises an outer layer made of a material comprising high-density polyethylene (HDPE) and a maleic anhydride grafted polyethylene coupling agent (MAgPE), and an inner layer made of a material comprising a polyamide homopolymer and a maleic anhydride grafted polyethylene coupling agent (MAgPE), said process comprising the steps of
(i) providing said outer layer material and said inner layer material;
(ii) regrinding scrap outer and inner layer material;
(iii) mixing said reground scrap outer and inner layer material with said outer layer material;
(iv) co-extruding outer and inner layers to form a bi-layered parison;
(v) blow molding said parison; and
(vi) demolding and deburring said blow molded parison, whereby to produce a marketable container.

10. The process according to claim 9, wherein the mixing of step (iii) is such that the reground material is mixed at a weight ratio of from 15 to 40 % by weight of the outer layer material.

11. The process according to claim 9 or claim 10, wherein
(a) the grains of the outer layer consisting of HDPE, reground scraps of the inner/outer layer material, MAgPE and MB are sorted into groups corresponding to each constituent material of a container and each group of grains is fed to a mixer at a predetermined weight ratio corresponding to the weight ratio of each constituent material in the container, excluding the regrind material; or
(b) the outer layer material is extruded at a temperature of 220°C to 230°C and the inner layer material is extruded at a temperature of 230°C to 240°C; or
(c) the parison is pre-blown by inert gas; or
(d) the parison is pre-blown by inert gas, and wherein the inert gas is nitrogen; or
(e) the parison is pre-blown by inert gas, and wherein the inert gas is injected into the interior of the parison at approximately room temperature and at a pressure of less than 100 kPa.

## Patentansprüche

1. Doppelschichtiger Behälter für gefährliche Substanzen, umfassend coextrudierte äußere und innere Schichten, wobei die innere Schicht ein Polyamidhomopolymer und einen mit Maleinsäureanhydrid gepfropften Polyethylenhaftvermittler (MAgPE) umfasst und die äußere Schicht Polyethylen hoher Dichte (HDPE), einen mit Maleinsäureanhydrid gepfropften Polyethylenhaftvermittler (MAgPE) und ein regranuliertes Material aus den äußeren und inneren Schichten umfasst.

2. Doppelschichtiger Behälter nach Anspruch 1, wobei
(a) die äußere Schicht eine Dicke im Bereich von 90% - 98%, auf die gesamte Wanddicke des Behälters bezogen, aufweist;
(b) die Dicke der inneren Schicht im Bereich von 30 bis 100 Mikron liegt; und/oder
(c) die coextrudierten inneren und äußeren Schichten zur Gestalt des Behälters blasgeformt werden.

3. Doppelschichtiger Behälter nach Anspruch 1 oder Anspruch 2, wobei das Regranulatmaterial im Bereich von 15 bis 40 Gew.-%, auf die äußere Schicht bezogen, liegt.

4. Doppelschichtiger Behälter nach Anspruch 3, wobei
(a) wobei das Regranulatmaterial etwa 30 Gew.-%, auf die äußere Schicht bezogen, umfasst;
(b) das Polyethylen hoher Dichte einen Schmelzindex von 4,5 - 10,0 g/10 min (190 °C/21,6 kg), eine Dichte von etwa 0,952 g/cm³, eine Dehngrenze von etwa 28 MPa beim Strecken mit 50 mm/min, eine Dehnung von mehr als 700 % beim Bruch, einen Biegemodul von etwa 1200 MPa, eine Härte von etwa 66 Shore D, eine Kerbschlagfestigkeit von etwa 100 kJ/m² und eine Umwelt-Spannungsrissbeständigkeit von mehr als 400 Stunden aufweist;
(c) das MAgPE der äußeren Schicht eine Dichte im Bereich zwischen 0,956 - 0,960 g/cm³, eine Massenfließgeschwindigkeit im Bereich von 2 - 3 g/10 min bei 190 °C /2,16 kg, einen Schmelzpunkt im Bereich zwischen 133 - 136 °C, einen Feuchtigkeitsgehalt von weniger als 0,1 Gew.-% und ein Maleinsäureanhydridpropfniveau von etwa 1,0 Gew.-% aufweist; und/oder
(d) die äußere Schicht des Weiteren bis zu 2 Gew.-% farbkonzentrierenden Masterbatch (MB) umfasst.

5. Doppelschichtiger Behälter nach Anspruch 4(c), wobei das MAgPE mit dem HDPE gemischt ist und das Regranulatmaterial in der äußeren Schicht in einer MAgPE-Konzentration im Bereich zwischen 3 und 4 Gew.-% liegt.

6. Doppelschichtiger Behälter nach einem der Ansprüche 1 bis 5, wobei
(a) das Polyamidhomopolymer Nylon ist; und/oder
(b) das Polyamidhomopolymer eine Dichte von etwa 1,06 g/cm³, eine Kerbschlagfestigkeit von etwa 65 Charpy bei 23 °C im trockenen Zustand und von etwa 15 Charpy bei -30 °C im trockenen Zustand, eine Durchlässigkeit, an Folien von 1 mm gemessen, von etwa 0,42 g/m²/Tag für Dioxan, 0,038 g/m²/Tag für n-Hexan, 0,13 g/m²/Tag für Toluol, 0,41 g/m²/Tag für Kohlendisulfid, 2,8 g/m²/Tag für Chloroform und 0,03 g/m²/Tag für Ethylether und eine Massenvolumenfließgeschwindigkeit von etwa 35 ml/10 min bei 275 °C/5 kg, einen Schmelzpunkt von etwa 222 °C und einen Feuchtigkeitsgehalt von weniger als 0,3 Gew.-% aufweist.

7. Doppelschichtiger Behälter nach einem der Ansprüche 1 bis 6, wobei das MAgPE der inneren Schicht eine Dichte im Bereich zwischen 0,956 - 0,960 g/cm³, eine Massenfließgeschwindigkeit im Bereich von 2 - 3 g/10 min bei 190 °C/2,16 kg, einen Schmelzpunkt im Bereich zwischen 133 - 136°C, einen Feuchtigkeitsgehalt von weniger als 0,1 Gew.-% und ein Maleinsäureanhydridpropfniveau von etwa 1,0 Gew.-% aufweist.

8. Doppelschichtiger Behälter nach Anspruch 7, wobei der Haftvermittler mit dem Polyamidhomopolymer in der inneren Schicht in einer MAgPE-Konzentration im Bereich von bis zu 4 Gew.-% gemischt wird.

9. Verfahren für die Herstellung eines doppelschichtiger Behälters für gefährliche Substanzen, welcher Behälter eine äußere Schicht, die aus einem Material besteht, das Polyethylen hoher Dichte (HDPE) und einen mit Maleinsäureanhydrid gepfropften Polyethylenhaftvermittler (MAgPE) umfasst, und eine innere Schicht umfasst, die aus einem Material besteht, das ein Polyamidhomopolymer und einen mit Maleinsäureanhydrid gepfropften Polyethylenhaftvermittler (MAgPE) umfasst, wobei das Verfahren folgende Schritte umfasst
(i) das Bereitstellen des Materials der äußeren Schicht und des Materials der inneren Schicht;
(ii) das Regranulieren des Ausschussmaterials der inneren und äußeren Schicht;
(iii) das Mischen des regranulierten Ausschussmaterials der äußeren und inneren Schicht mit dem Material der äußeren Schicht;
(iv) das Coextrudieren der äußeren und inneren Schichten unter Bildung eines doppelschichtigen Vorformlings;
(v) das Blasformen des Vorformlings; und
(vi) das Entformen und Entgraten des blasgeformten Vorformlings, wodurch ein verkäuflicher Behälter hergestellt wird.

10. Verfahren nach Anspruch 9, wobei das Mischen des Schritts (iii) derart stattfindet, dass das regranulierte Material in einem Gewichtsverhältnis von 15 bis 40 Gew.-%, auf das Material der äußeren Schicht bezogen, gemischt wird.

11. Verfahren nach Anspruch 9 oder Anspruch 10, wobei
(a) Körner der äußeren Schicht, die aus HDPE besteht, regranulierte Ausschussmaterialien des Materials der inneren/äußeren Schicht, MAgPE und MB in Gruppen sortiert werden, die jedem konstituierenden Material des Behälters entsprechen und jede Gruppe von Körnern in eine Mischvorrichtung in einem vorbestimmten Gewichtsverhältnis eingespeist wird, das dem Gewichtsverhältnis jedes konstituierenden Materials in dem Behälter, ausschließlich des regranulierten Materials, entspricht; oder
(b) das Material der äußeren Schicht bei einer Temperatur von 220 °C bis 230 °C extrudiert wird und das Material der inneren Schicht bei einer Temperatur von 230 bis 240 °C extrudiert wird; oder
(c) der Vorformling durch internes Gas vorgeblasen wird; oder
(d) der Vorformling durch inertes Gas vorgeblasen wird und wobei das inerte Gas Stickstoff ist; oder
(e) der Vorformling durch inertes Gas vorgeblasen wird und wobei das inerte Gas in das Innere des Vorformlings ungefähr bei Raumtemperatur und bei einem Druck von weniger als 100 kPa injiziert wird.

## Revendications

1. Contenant à deux couches pour substances dangereuses, comprenant des couches externe et interne coextrudées, ladite couche interne comprenant un homopolymère de polyamide et un agent de pontage polyéthylène greffé anhydride maléique (MAgPE), et ladite couche externe comprenant un polyéthylène haute densité (HDPE), un agent de pontage polyéthylène greffé anhydride maléique (MAgPE), et un matériau rebroyé des dites couches externe et interne.

2. Contenant à deux couches selon la revendication 1, dans lequel (a) la couche externe a une épaisseur comprise entre 90 et 98 % de l'épaisseur globale de paroi du contenant ; (b) l'épaisseur de la couche interne est comprise entre 30 et 100 microns ; et/ou (c) les couches interne et externe coextrudées sont moulées par soufflage à la forme du dit contenant.

3. Contenant à deux couches selon la revendication 1 ou la revendication 2, dans lequel le matériau rebroyé représente entre 15 et 40 % en poids de la couche externe.

4. Contenant à deux couches selon la revendication 3, dans lequel
(a) le matériau rebroyé représente environ 30 % en poids de la couche externe ;
(b) le polyéthylène haute densité a un indice de fluidité de 4,5 à 10,0 g/10 min (190 °C/21,6 kg), une densité d'environ 0,952 g/cm³, une limite d'élasticité d'environ 28 MPa quand on l'étire à 50 mm/min, un allongement supérieur à 700 % à la rupture, un module d'élasticité en flexion d'environ 1 200 MPa, une dureté d'environ 66 sur l'échelle Shore D, une résistance à l'essai de choc entaillé d'environ 100 kJ/m² et une résistance à la fissuration sous contrainte prolongée supérieure à 400 heures ;
(c) le MAgPE de la couche externe a une densité comprise entre 0,956 et 0,960 g/cm³, un débit massique compris entre 2 et 3 g/10 min à 190 °C/2,16 kg, un point de fusion compris entre 133 et 136 °C, une teneur en humidité inférieure à 0,1 en poids, et un niveau de greffe d'anhydride maléique d'environ 1,0 % en poids ; et/ou
(d) la couche externe comprend en outre jusqu'à 2 % en poids de mélange-maître (MB) de concentration de couleur.

5. Contenant à deux couches selon la revendication 4(c), dans lequel le MAgPE est mélangé à l'HDPE et au matériau rebroyé dans la couche externe suivant une concentration de MAgPE comprise entre 3 et 4 % en poids.

6. Contenant à deux couches suivant l'une quelconque des revendications 1 à 5, dans lequel
(a) l'homopolymère de polyamide est du nylon ; et/ou
(b) l'homopolymère de polyamide a une densité d'environ 1,06 g/cm³, une résistance à l'essai de choc entaillé d'environ 65 Charpy à 23 °C à sec et d'environ 15 Charpy à -30°C à sec, une perméabilité, quand on la mesure sur des feuilles de 1 mm, d'environ 0,42 g/m²-jour pour le dioxane, de 0,038 g/m²-jour pour le n-hexane, de 0,13 g/m²-jour pour le toluène, de 0,41 g/m²-jour pour le disulfure de carbone, de 2,8 g/m²-jour pour le chloroforme, et de 0,03 g/m²-jour pour l'éther éthylique, un débit massique/volumique compris entre environ 35 ml/10 min à 275 °C/5 kg, un point de fusion d'environ 222 °C, et une teneur en humidité inférieure à 0,3 % en poids.

7. Contenant à deux couches suivant l'une quelconque des revendications 1 à 6, dans lequel le MAgPE de la couche interne a une densité comprise entre 0,956 et 0,960 g/cm³, un débit massique compris entre 2 et 3 g/10 min à 190 °C/2,16 kg, un point de fusion compris entre 133 et 136 °C, une teneur en humidité inférieure à 0,1 en poids, et un niveau de greffe d'anhydride maléique d'environ 1,0 % en poids.

8. Contenant à deux couches selon la revendication 7, dans lequel l'agent de pontage est mélangé avec l'homopolymère de polyamide dans la couche interne suivant une concentration de MAgPE pouvant atteindre 4 % en poids.

9. Procédé pour produire un contenant à deux couches pour substances dangereuses, ledit contenant comprenant une couche externe faite d'un matériau comportant un polyéthylène haute densité (HDPE) et un agent de pontage polyéthylène greffé anhydride maléique (MAgPE), et une couche interne faite d'un matériau comprenant un homopolymère de polyamide et un agent de pontage polyéthylène greffé anhydride maléique (MAgPE), ledit procédé comprenant les étapes consistant à
(i) fournir ledit matériau de couche externe et ledit matériau de couche interne ;
(ii) rebroyer les déchets de matériau de couche externe et interne ;
(iii) mélanger ledit matériau rebroyé de déchets de couche externe et interne au dit matériau de couche externe ;
(iv) coextruder les couches externe et interne pour former une paraison à deux couches ;
(v) mouler par soufflage ladite paraison ; et
(vi) démouler et ébavurer ladite paraison moulée soufflée, afin de produire un contenant commercialisable.

10. Procédé selon la revendication 9, dans lequel le mélange de l'étape (iii) est tel que le matériau rebroyé est mélangé suivant un ratio de poids compris entre 15 et 40 % en poids du matériau de couche externe.

11. Procédé selon la revendication 9 ou la revendication 10, dans lequel
(a) les grains de la couche externe constitué d'HDPE, de déchets rebroyés du matériau de la couche interne/externe, de MAgPE et de MB sont triés en groupes correspondant à chaque matériau constitutif d'un contenant et chaque groupe de grains est alimenté dans un mélangeur suivant un ratio de poids prédéterminé correspondant au ratio de poids de chaque matériau constitutif dans le contenant, à l'exception du matériau rebroyé ; ou
(b) le matériau de couche externe est extrudé à une température de 220 °C à 230 °C et le matériau de couche interne est extrudé à une température de 230 °C à 240 °C ; ou
(c) la paraison est présoufflée par du gaz inerte ;
(d) la paraison est présoufflée par du gaz inerte, et dans lequel le gaz inerte est de l'azote ; ou
(e) la paraison est présoufflée par du gaz inerte, et dans lequel le gaz inerte est injecté dans l'intérieur de la paraison à une température proche de la température ambiante et à une pression inférieure à 100 kPa.
